# EUROPÄISCHE PATENTANMELDUNG

(11) **EP 2 998 806 A1**
(43) Veröffentlichungstag der Anmeldung: **23.03.2016**
(21) Anmeldenummer: 14185648.4
(22) Anmeldetag: 19.09.2014
(51) Int. Cl.: G05B 19/042, G05B 19/05, G05B 23/02, G06F 9/44, G06F 11/30

(54) **Verfahren und Vorrichtung zur Erzeugung von Programmcode für die Überwachung von Betriebszuständen einer Automatisierungskomponente**

(71) Anmelder: Siemens Aktiengesellschaft, 80333 München (DE)
(72) Erfinder: Opaterny, Thilo, 90453 Nürnberg (DE); Feigin, Wjatscheslaw, 90766 Fürth (DE); Rachinger, Bernd, 91575 Windsbach (DE)

(57) **Zusammenfassung**

Die Erfindung betrifft ein Verfahren und ein Engineeringsystem zur Erzeugung von Programmcode für die Überwachung von Betriebszuständen einer industriellen Automatisierungskomponente, wobei das Betriebsprogramm mit einem Compiler erzeugt wird. Dabei wird für die Überwachung zumindest eine temporäre Variable oder einen Übergabeparameter oder einen Rückgabeparameter der Funktion als zu überwachenden Operand definiert, wobei durch den Compiler ein Überwachungs-Funktionsbaustein erzeugt und in einen zyklisch oder ereignisgesteuert aufgerufenen Baustein, insbesondere einen Organisationsbaustein, eingefügt wird, wobei durch den Compiler bei der Erzeugung des Betriebsprogramms zumindest ein oder jeder Aufrufbefehl oder der ausführbare Programmcode der Funktion selbst mit einer Befehlssequenz erweitert wird, wobei die Daten für den Operanden in einen Datenspeicher des Überwachungs-Funktionsbausteins kopiert werden. Dadurch ist es möglich, den Programmcode für die Überwachung sowohl organisatorisch als auch hinsichtlich des Ablaufzyklus' von den überwachten Funktionen zu trennen und einen Zugriff auf lokale, temporäre Daten dabei zu gewährleisten.

## Beschreibung

Die Erfindung betrifft ein Verfahren zur Erzeugung von Programmcode für die Überwachung von Betriebszuständen einer Funktion im Betriebsprogramm einer industriellen Automatisierungskomponente gemäß dem Oberbegriff des Patentanspruchs 1, und ein Engineeringsystem für die Erstellung von Programmcode für die Überwachung von Betriebszuständen einer Funktion im Betriebsprogramm einer industriellen Automatisierungskomponente gemäß dem Oberbegriff des Patentanspruchs 10.

Bei der Prozess Diagnose geht es darum, das Personal, das eine industrielle Automatisierungsanordnung (kurz: Anlage) bedient oder "fährt", beim Betrieb zu unterstützen, da es vorkommen kann, dass die Anlage nicht genau wie vorgesehen arbeitet.

Die angesprochenen Anlagen werden von speicherprogrammierbaren Steuerungen gesteuert und kontrolliert. Die Erstellung des Betriebsprogramms (Steuerungsprogramm) ist meist aufwändig; ein nicht unwesentlicher Teil des Aufwandes besteht darin, den für die Prozessdiagnose nötigen Programmcode zu schreiben.

Auf Bedienpanels sollen dabei Meldungen (Fehlermeldungen, Warnungen etc.) ausgegeben werden. Dazu wird das Betriebsprogramm um zusätzlichen Programmcode erweitert, der mit der eigentlichen Steuerungsaufgabe nur indirekt zu tun hat. Die Programmierer können durch zusätzliche Abfragen im Programm dafür sorgen, dass Unregelmäßigkeiten, beispielsweise unplausible Sensorsignale, im laufenden Betrieb erkannt und gemeldet werden. Genauso können sie durch zusätzliche Programmzeilen Ausführungszeiten überwachen und dgl. Tritt eine Unregelmäßigkeit auf, so wird eine entsprechende Meldung vorbereitet und an das Bedienpanel versandt. Der Bediener kann dann Maßnahmen ergreifen, beispielsweise die Betriebsstörung beseitigen.

Beispielsweise kann definiert werden, welche Situationen im normalen Betrieb nicht vorkommen sollen, z.B. ein verklebter Geber und der daraus resultierende falsche Input. Für diesen Störfall kann innerhalb einer explizit ausprogrammierten Funktion eine Erkennungsroutine implementiert werden. Treten dann im späteren Betrieb unplausible, nicht vorgesehene Inputvektoren auf, so generiert die Funktion eine Meldung oder einen Alarm und gibt diese als Rückgabewert (Output) zurück.

In einem einfachen Fall werden globale Instanzen von Funktionsbausteinen oder dgl. überwacht. Die dabei als Operand für Überwachungen beobachteten Variablen sind regelmäßig global definiert und daher für eine Überwachungsroutine stets verfügbar und auswertbar. Für temporäre lokale Variablen von Funktionen gilt dies jedoch nicht, und für Aufruf- und Rückgabewerte der Funktionen nur eingeschränkt. Dies liegt beispielsweise daran, dass den Funktionen kein dauerhafter Datenbaustein zugeordnet ist; sie verlieren nach dem Aussprung wieder ihr "Gedächtnis".

Angenommen, eine Ein- oder Ausgangsvariable einer Funktion soll überwacht werden. Das Problem ist, dass zum Zeitpunkt der Erstellung der Funktion weder bekannt ist, wie viele Aufrufe dieses Bausteins einmal erzeugt werden, noch wird es globale Instanz-Daten für diesen Baustein geben. Als Beispiel kann angenommen werden, die Funktion habe einen Ausgang, der nur für 3 Sekunden TRUE sein darf. Wie bei globalen Variablen soll die Überwachung mittels einer separaten Überwachungsroutine oder dgl. durchgeführt werden, so existiert bei den Funktionen das Problem, dass die Variable nur im Kontext der Funktion gilt, was bedeutet, dass die Überwachungsroutine nur im Kontext der Funktion gespeichert werden kann, was aus Gründen der Übersichtlichkeit und "Wartbarkeit" vermieden werden soll. Ein "globaler" Überwachungsbaustein hat jedoch keinen Zugriff auf die lokalen Daten der Funktion, die überwacht werden soll, da diese Daten erst zur Laufzeit der Funktion auf dem Aufrufstapel zur Verfügung gestellt werden.

Es ist daher eine Aufgabe der vorliegenden Erfindung, die Überwachung von Funktionen industrieller Automatisierungsprogramme zu vereinfachen.

Es ist ein Kerngedanke der Lösung dieser Aufgabe, dass die Überwachung einer lokalen bzw. temporären Variablen einer Funktion zunächst in einer lokalen Überwachungstabelle gespeichert wird. Wenn die Funktion aufgerufen wird, so werden die oder alle lokalen Überwachungen der Funktion einer globalen Überwachungstabelle zugeordnet. Wird ein Baustein mit einem Aufruf der Funktion, welche die Überwachung enthält, übersetzt, so generiert der Compiler vor dem eigentlichen Aufruf und nach dem Rücksprung, und zwar für einen Zeitpunkt, bevor der Aufrufstapel der Funktion geräumt wird, eine Befehlssequenz (ausführbaren Programmcode), welche die zu überwachenden lokalen Variablen in die Instanz eine Überwachungs-Programmbausteins, welcher aus der Überwachungstabelle generiert wird, kopiert. Das Engineeringsystem sorgt weiter dafür, dass die dabei erzeugten Überwachungs-Funktionsbausteine zyklisch oder ereignisgesteuert abgearbeitet werden, beispielsweise während des Ausführens eines zyklisch aufgerufenen Organisationsbausteins.

Die Lösung der Ausgabe sieht insbesondere ein Verfahren nach Patentanspruch 1 und ein Engineeringsystem nach Patentanspruch 10 vor.

Dabei wird ein Verfahren zur Erzeugung von Programmcode für die Überwachung von Betriebszuständen einer Funktion eines Betriebsprogramm einer industriellen Automatisierungskomponente vorgeschlagen, wobei das Betriebsprogramm durch ein Engineeringsystem mit einem Compiler erzeugt wird. Dabei wird durch einen Anwender für die Überwachung zumindest eine temporäre Variable oder einen Übergabeparameter oder einen Rückgabeparameter der Funktion als zu überwachenden Operand definiert, wobei durch den Compiler ein Überwachungs-Funktionsbaustein mit ausführbarem Programmcode erzeugt und dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt wird, wobei zur Überwachung der temporären Variablen oder des Übergabeparameters oder des Rückgabeparameters der Funktion durch den Compiler bei der Erzeugung des ausführbaren Programmcodes des Betriebsprogramms zumindest ein oder jeder Aufrufbefehl für die zu überwachende Funktion oder der ausführbare Programmcode der Funktion selbst mit einer Befehlssequenz erweitert wird, wobei mit Abarbeiten dieser Befehlssequenz die Daten für den Operanden in einen Datenspeicher des Überwachungs-Funktionsbausteins kopiert werden. Dadurch ist es möglich, den Programmcode für die Überwachung sowohl organisatorisch als auch hinsichtlich des Ablaufzyklus' von den überwachten Funktionen zu trennen. Eine "globale" Überwachungseinrichtung zur zyklischen Überwachung einer Vielzahl von Funktionen und Funktionsbausteinen, auch solchen mit temporärem, lokalem Speicher und Datenübergabe über den Stack, kann anhand der vom Anwender kursorisch eingegebenen Informationen automatisch vom Compiler erzeugt werden.

Die Lösung der Aufgabe sieht außerdem ein Engineeringsystem zur Erzeugung von Programmcode für die Überwachung von Betriebszuständen einer Funktion eines Betriebsprogramms einer industriellen Automatisierungskomponente vor, wobei das Engineeringsystem zumindest einen Editor zur Erstellung und Bearbeitung von Quellcode und einen Compiler zur Erzeugung von ausführbarem Programmcode umfasst. Dabei ist der Editor zur Definition zumindest einer temporärer Variable oder eines Übergabeparameters oder eines Rückgabeparameters der Funktion als zu überwachenden Operand für die Überwachung eingerichtet, und der Compiler ist weiterhin zur Erzeugung eines Überwachungs-Funktionsbausteins mit ausführbarem Programmcode eingerichtet. Dabei wird dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt, wobei zur Überwachung der temporären Variablen der Funktion durch den Compiler bei der Erzeugung des ausführbaren Programmcodes des Betriebsprogramms zumindest ein oder jeder Aufrufbefehl für die zu überwachende Funktion oder der ausführbare Programmcode der Funktion selbst mit einer Befehlssequenz erweitert wird, und wobei diese Befehlssequenz derart ausgestaltet ist, dass mit deren Abarbeiten die Daten für den Operanden in einen Datenspeicher des Überwachungs-Funktionsbausteins kopiert werden. Mit einem solchen Engineeringsystem lassen sich die im Zusammenhang mit dem Verfahren beschriebenen Vorteile erzielen.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für das erfindungsgemäße Engineeringsystem. Die beschriebenen vorteilhaften Ausgestaltungen können sowohl einzeln, als auch in Kombination miteinander angewendet werden.

Wenn durch einen Anwender in einer Überwachungstabelle der zumindest eine zu überwachende Operand, zumindest eine Auslösebedingung für die Erzeugung eines Überwachungsereignisses und eine bei Eintritt des Überwachungsereignisses auszuführende Aktion, insbesondere eine auszugebende Meldung, für die Überwachung definiert wird, und wenn durch den Compiler aus den in der Überwachungstabelle eingegebenen Informationen der Überwachungs-Funktionsbaustein mit ausführbarem Programmcode erzeugt wird, ergibt sich eine automatische Erzeugung des entsprechenden ausführbaren Codes, wobei der Source-Code dazu nicht in einer Programmiersprache für Speicherprogrammierbare Steuerungen erstellt werden muss, sondern übersichtlich in einer Tabelle funktional definiert werden kann.

Der Zugriff des ggf. einzigen, globalen Überwachungs-Funktionsbausteins auf die lokalen, temporären Daten bzw. den daraus abgeleiteten Operanden wird einfach bewerkstelligt, indem die Daten für den Operand in den Datenbaustein des Überwachungs-Funktionsbausteins kopiert werden. Dazu alternativ oder zusätzlich können die Daten für den Operand in zumindest eine globale Variable oder einen globalen Datenbaustein des Betriebsprogramms kopiert werden.

Vorteilhaft ist es, die Durchführung der Überwachung, also das "Zeitraster", in welchem die Überwachungsbedingungen ausgewertet werden, nicht an den Aufruf eines überwachten Funktionsbaustein zu koppeln, sondern an einen zyklisch aufgerufenen Baustein, einen sog. Organisationsbaustein. Wenn, wie üblich, für die Abarbeitung des Betriebsprogramms der Automatisierungskomponente eine Anzahl Ablaufebenen vorgesehen sind, zu denen jeweils ein zugeordneter Baustein, insbesondere Organisationsbaustein, in einem eigenen Zyklus oder von einem unterschiedlichen Ereignis gesteuert aufgerufen wird, wobei für das Betriebsprogramm eine Mehrzahl Überwachungstabellen vorgesehen werden und jede dieser Überwachungstabellen und damit die darin jeweils definierten Überwachungsvorgänge einer dieser Ablaufebenen zugeordnet wird, kann also vorteilhaft jeweils einem der jeweiligen Ablaufebene zugeordneten Baustein, insbesondere Organisationsbaustein, der Überwachungs-Funktionsbaustein mit dem ausführbarem Programmcode, der aus den gesamten Inhalten der jeweiligen Überwachungstabelle erzeugt wird, oder ein Aufrufbefehl zu diesem Programmcode, hinzugefügt werden.

Das Verfahren kann vorteilhaft in Strukturen mit hierarchischer Gliederung eingesetzt werden. Dies bedeutet, dass zumindest ein übergeordneter Programmbaustein existiert, der oft auch als Organisationsbaustein bezeichnet wird. In diesem übergeordneten Programmbaustein sind dann Aufrufe für untergeordnete Programmbausteine, also andere Bausteine, Funktionen etc., enthalten. Für diese aus der übergeordneten Struktur heraus aufgerufenen Programmbausteine werden zumindest in den Fällen, in denen eine solche Funktion oder dgl. zu überwachen ist und diese eine zu überwachende lokale (nicht temporäre) Variable aufweist, für diese Funktion eine eigene Überwachungstabelle erzeugt. In den Fällen, in denen in einer übergeordneten Funktion oder einem Organisationsbaustein ein Aufruf einer zu überwachenden Funktion programmiert wird, sollen die Überwachungen aus der Überwachungstabelle dieser Funktion der Überwachungstabelle der jeweiligen übergeordneten Funktion oder Funktionsbausteins zugeordnet werden. Natürlich wird dabei sichergestellt, dass beim "kopieren" der Überwachungsaufträge in eine übergeordnete Überwachungstabelle die betreffende Überwachung im laufenden Betrieb nicht doppelt ausgeführt wird. Außerdem wird dabei vorausgesetzt, dass zu überwachende Variablen, Operanden etc. der untergeordneten Programmbausteine global definiert sind, d.h., dass deren Inhalt beim Abarbeiten des Überwachungs-Funktionsbaustein, der im Kontext des übergeordneten Funktionsbausteins oder Organisationsbausteins ausgeführt wird, die entsprechenden Inhalte auch durch den Überwachungs-Funktionsbaustein zugreifbar bzw. lesbar sind. Diese "rekursive Propagierung" der Überwachungsaufträge untergeordneter Funktionen und Funktionsbausteine an die jeweils übergeordnete, aufrufende Struktur sorgt dafür, dass nur wenige oder, im Falle des Anknüpfens der Überwachungen an nur eine Ablaufebene und damit nur einen Organisationsbaustein, alle Überwachungen in nur einer Tabelle übersichtlich eingesehen und bearbeitet werden können.

Vorteilhaft umfasst die Überwachungstabelle eine von einem Benutzer editierbare Informationseinheit mit mehreren Datenfeldern für die Informationen eines jeweiligen Überwachungsauftrages, wobei die Überwachungstabelle mehrere Zeilen, Blätter oder sonstige Informationseinheiten für die Eingabe mehrerer Überwachungsaufträge umfasst. Diese Überwachungstabelle führt also durch das "Make" zu Programmcode, so dass die Definition von Programmcode via solcher Tabellen als eine eigene, einfache und effektive Programmiersprache wirkt.

In den Fällen, in denen eine komplexere Auslösebedingung in einem Eintrag (z.B. Zeile) der Überwachungstabelle definiert werden soll, kann die Überwachungstabelle für die Auslösebedingung zumindest einer Überwachung einen Verweis zu einem Eingabefeld enthalten, wobei mittels dieses Eingabefeldes die Auslösebedingung eingebbar oder editierbar ist. Dadurch ist kann nach Art einer "Lupe" oder anderer Eingabemittel dann ein größeres "Programmierfenster" geöffnet werden. Vorteilhaft ist das sich dabei öffnende Eingabefeld ein Programmeditor-Fenster für Programmcode in einer Programmiersprache für speicherprogrammierbare Steuerungen ist. Das ermöglicht es einem Programmierer, die Auswertelogik in einer ihm vertrauten Programmiersprache zu definieren.

Die im Falle eines Ereignisses auszugebenden Alarmtexte, Fehlermeldungen oder dgl. sind vorteilhaft "dynamisierbar", indem die Überwachungstabelle für zumindest einen darin definierten Überwachungsvorgang mit einem bei Eintritt der Auslösebedingung auszugebenden Fehlertext oder eine Fehlerinformation versehen wird, wobei der Fehlertext oder die Fehlerinformation zumindest einen Platzhalter für einen zur Laufzeit zu aktualisierenden Wert eines Operanden oder einer Variablen umfasst.

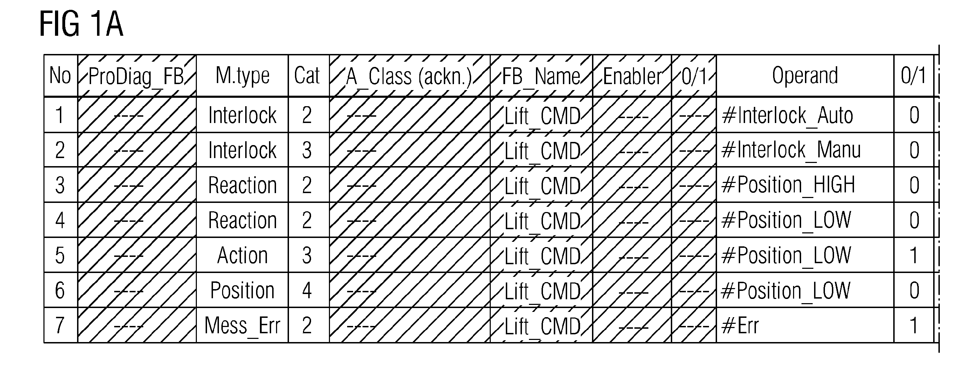

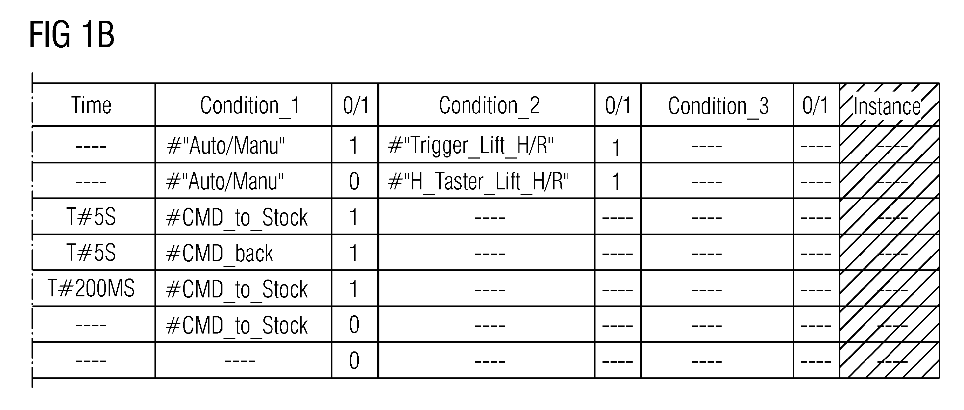

Ausführungsbeispiele des erfindungsgemäßen Verfahrens werden nachfolgend anhand der Zeichnung erläutert. Sie dienen gleichzeitig der Erläuterung eines erfindungsgemäßen Engineeringsystems.

Dabei zeigt die einzige Figur ausschnittsweise eine Überwachungstabelle, die vom Engineeringsystem in zumindest einen ausführbaren Überwachungs-Funktionsbaustein übersetzbar ist.

Es sei angenommen, dass eine Ein- oder Ausgangsvariable einer Funktion überwacht werden soll. Das Problem ist, dass zum Zeitpunkt der Erstellung (Programmierung) der Funktion weder bekannt ist, wie viele Aufrufe dieses Bausteins einmal erzeugt werden, noch wird es zur Laufzeit globale Instanz-Daten für diesen Baustein geben.

Beispiel: Die Funktion habe einen Ausgang, der nur für 3 Sekunden "TRUE" sein darf. Wie bei globalen Variablen soll die Überwachung durch eine einzige, unabhängige Überwachungs-Instanz erfolgen. Eine solche kann erfindungsgemäß mittels eines Tabelleneditors parametriert werden; ein Beispiel für eine solche Tabelle ist in der Figur gezeigt.

Allerdings sind bei Funktionen, die an einer Vielzahl Stellen eines komplexen Programms für unterschiedliche Zwecke aufgerufen werden, die Verwendung von globalen Variablen innerhalb der Funktion unvorteilhaft. Da eine lokale Variable nur im Kontext der Funktion gilt, bedeutet das, dass die lokale Überwachungs-Tabelle und nur im Kontext der Funktion gespeichert werden kann; die damit definierte Überwachung ist als an den "Quellcode" der Funktion geknüpft.

Wird nun später ein Aufruf der Funktion programmiert, so kann dieser Aufruf erfindungsgemäß einer globalen Überwachungstabelle und damit einer globalen Überwachung zugeordnet werden. Der Aufruf dieser globalen Überwachung und damit deren Verarbeitungszyklus ist somit unabhängig vom Aufruf der Funktion. Die zur Implementierung der Überwachung notwendigen Daten sollen, wie bei globalen Variablen, innerhalb der Instanz des für die Überwachung verwendeten Bausteins gespeichert werden. Der Überwachungsbaustein hat jedoch gemäß Stand der Technik keinen Zugriff auf die lokalen Daten der Funktion, der eine Überwachung zugeordnet ist, da diese Daten erst zur Laufzeit der Funktion auf dem Aufrufstapel zur Verfügung gestellt werden.

Gibt man nun der überwachten Funktion einen Zeiger auf die Daten in der Überwachungstabelle mit, so kann die Funktion die zu überwachenden Werte aus dem Aufrufstapel in die Instanz des Überwachungsbausteins kopieren. Je nach der Art, wie das System den Aufrufstapel realisiert, kann dies noch innerhalb der Parameterübergabe geschehen, d.h. der Zeiger wird gar nicht tatsächlich an die Funktion übergeben. Das heißt, dass die Befehlssequenz, die der Sicherung der Daten dient, nicht Bestandteil des ausführbaren Programmcodes der Funktion sein muss, sondern im ablauffähigen Code direkt vor und/oder nach dem Aufruf-Befehl ("call") der Funktion in der übergeordneten Instanz angeordnet sein kann; damit sind auch "importierte" Funktionen, deren lokale Datenstruktur unbekannt ist, zumindest hinsichtlich ihrer Aufruf- und Rückgabeparameter diagnosefähig. Die Funktion selbst muss nicht geändert werden.

Stand der Technik bei der Parameterübergabe ist es, dass zuerst auf dem Stapel ("stack") der zur Parameterübergabe nötige Speicherplatz reserviert wird. Dann werden die Eingangswerte auf dem Stapel abgelegt. Nun wird in die Funktion gesprungen und die lokalen Variablen auf dem Stapel initialisiert. Erst dann wird die Funktion ausgeführt. Nach dem Rücksprung aus der Funktion werden die Ausgangswerte vom Stapel in die angeschlossenen Variablen kopiert. Zuletzt wird der Stapel wieder geräumt. Das heißt, dass alle zu überwachenden Variablen nach dem Rücksprung aus der Funktion im Stapel liegen und von dort erfindungsgemäß in den Überwachungsbaustein kopiert werden können. Es wird dabei vorausgesetzt, dass überwachte Eingangsvariablen nicht durch den Funktionsbaustein verändert werden, obwohl auch das kein Problem darstellt, wenn diese vor dem eigentlichen Funktionsaufruf kopiert werden.

Dieses Verfahren erlaubt es, jedem Funktions-Aufruf einen gesonderten Eintrag in einer "globalen" Überwachungstabelle zuzuordnen; eine solche ist in der Figur exemplarisch gezeigt. Damit ist es möglich, die verschiedenen Aufrufe der Funktion jeweils getrennt zu überwachen. Das Verfahren ermöglicht es aber auch, allen Aufrufen denselben Eintrag in einer Überwachungstabelle zuzuordnen. Damit geht zwar die Unterscheidung der Funktionsaufrufe verloren, es müssen dafür aber weniger Meldungen definiert werden; d.h., weniger Tabelleneinträge gepflegt werden.

Beim Erzeugen der globalen Überwachung werden alle Zellen der lokalen Überwachung auf die globale Überwachung bzw. in die globale Überwachungstabelle übertragen. Programmiert ein Anwender mehrere Aufrufe einer Funktion, so bedeutet das zuerst einmal, dass alle Überwachungen dieselbe Meldung ausgeben. Dies kann erwünscht sein. Ist dies jedoch nicht erwünscht, so kann bereits in der lokalen Meldung ein erster Platzhalter für den Aufruf eingefügt werden. Dieser erste Platzhalter wird dann in der globalen Meldung den Namen des aufrufenden Bausteins und die Netzwerknummer zeigen, somit unterscheiden sich die Meldungen, die aus dieser lokalen Überwachung entstehen, und ein Anwender kann zwischen den Meldungen unterscheiden. Das gilt zumindest solange bis ein Anwender nicht mehrere Aufrufe der Funktion mit Überwachung innerhalb eines Netzwerks programmiert. Sollte dies der Fall sein, so können die Meldungen dennoch in den entstandenen globalen Überwachungen unterscheidbar gemacht werden, indem beispielsweise weitere Platzhalter oder unterschiedliche Meldetexte in den entsprechenden Einträgen der globalen Überwachungstabelle eingepflegt werden.

Es ist möglich, die lokalen Überwachungen einer Funktion an die Aufrufer der Funktion weiterzugeben. Dies kann zwei Effekte nach sich ziehen. Wird eine Funktion mehrfach innerhalb einer Funktion aufgerufen, so reduziert sich die Zahl der Einträge in der globalen Überwachungstabelle, da die aufrufende Funktion, wenn sie nicht selbst mehrfach aufgerufen ist, nur einen Eintrag in der globalen Überwachungstabelle erzeugt. Wird die aufrufende Funktion öfter verwendet als die überwachte Funktion, so erhöht sich die Zahl der Einträge in den globalen Überwachungstabellen.

Die Weitergabe einer Überwachung an die aufrufende Funktion hat in einem Beispiel Auswirkungen auf den ersten Platzhalter in der Meldung. Der erste Platzhalter gibt den Namen des aufrufenden Bausteins und die Netzwerknummer aus, er übernimmt nun die Information des Bausteins, an den die Überwachung weitergegeben wurde. Dies kann erwünscht sein. Ist dies jedoch nicht erwünscht, so kann mittels eines zweiten Platzhalters ausgedrückt werden, dass alle Baustein-Namen im Aufrufstapel ausgegeben werden sollen. Sollte der Anwender entscheiden, die Überwachungen immer an den Aufrufer weiterzugeben und alle Überwachungen nur einer globalen Überwachungstabelle zuzuordnen, so wird es letztendlich nur eine globale Überwachungs-Ablaufebene und nur einen globale Überwachungs-Funktionsbaustein geben. Dank des zweiten Platzhalters kann man dennoch alle Meldungen unterscheiden, obwohl der Anwender nur eine lokale und eine globale Überwachung definiert hat.

Die Kernidee der Erfindung besteht darin, dass die Überwachung einer lokalen Variablen einer Funktion in einer lokalen Überwachungstabelle gespeichert wird. Wenn die Funktion aufgerufen wird, so werden die lokalen Überwachungen der Funktion einer globalen Überwachungstabelle zugeordnet. Wird der Baustein mit dem Aufruf der Funktion, welche eine Überwachung enthält, übersetzt, so generiert der Compiler vor dem eigentlichen Aufruf und nach dem Rücksprung, bevor der Aufrufstapel der Funktion geräumt wird, einen zusätzlichen Programmcode (Befehlssequenz), welcher die zu überwachenden lokalen Variablen in die Instanz des Bausteins, welcher aus der Überwachungstabelle generiert wird, kopiert. Der Anwender hat die Möglichkeit, jedem Aufruf einer Funktion mit lokalen Überwachungen einen gesonderten Eintrag in einer globalen Überwachungstabelle zuzuordnen. Die aus den lokalen Überwachungen entstandenen globalen Überwachungen können zwischen den globalen Überwachungstabellen verschoben werden. Die Erfindung ermöglicht es dem Anwender, fast alle Einträge, die aufgrund von lokalen Überwachungen in den globalen Überwachungstabellen entstanden sind, zu modifizieren. Die Ausnahme ist der überwachte Operand, da dieser die Verbindung zur lokalen Überwachung darstellt. Unveränderte globale Einträge werden bei Veränderung der lokalen Überwachung nachgezogen, veränderte nicht.

Der Anwender kann auch mehrere Aufrufe einem Eintrag in einer globalen Überwachungstabelle zuordnen. Der Anwender kann auch die lokalen Überwachungen einer Funktion an den aufrufenden Baustein weitergeben. Ein erster Platzhalter erlaubt, wenn gewünscht, die automatische Unterscheidung von Aufrufen in der Meldung, solange die Überwachungen nicht an die aufrufenden Funktionen weitergegeben wurden. Ein zweiter Platzhalter ermöglicht, wenn gewünscht, die automatische Unterscheidung aller Funktionsaufrufe in der Meldung, obwohl dafür nur eine globale Überwachung existieren muss. Beim Übersetzen der Bausteine wird die lokale Überwachung, deren globale Instanzen an globale Überwachungstabellen zugeordnet sind, wie globale Überwachungen durch den Compiler übersetzt.

## Patentansprüche

1. Verfahren zur Erzeugung von Programmcode für die Überwachung von Betriebszuständen einer Funktion eines Betriebsprogramms einer industriellen Automatisierungskomponente,
wobei das Betriebsprogramm durch ein Engineeringsystem mit einem Compiler erzeugt wird,
**dadurch gekennzeichnet,**
**dass** durch einen Anwender für die Überwachung zumindest eine temporäre Variable oder einen Übergabeparameter oder einen Rückgabeparameter der Funktion als zu überwachenden Operand definiert wird,
**dass** durch den Compiler ein Überwachungs-Funktionsbaustein mit ausführbarem Programmcode erzeugt und dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt wird,
wobei zur Überwachung der temporären Variablen oder des Übergabeparameters oder des Rückgabeparameters der Funktion durch den Compiler bei der Erzeugung des ausführbaren Programmcodes des Betriebsprogramms zumindest ein oder jeder Aufrufbefehl für die zu überwachende Funktion oder der ausführbare Programmcode der Funktion selbst mit einer Befehlssequenz erweitert wird, wobei mit Abarbeiten dieser Befehlssequenz die Daten für den Operanden in einen Datenspeicher des Überwachungs-Funktionsbausteins kopiert werden.

2. Verfahren nach Patentanspruch 1,
**dadurch gekennzeichnet,**
**dass** durch einen Anwender in einer Überwachungstabelle der zumindest eine zu überwachende Operand, zumindest eine Auslösebedingung für die Erzeugung eines Überwachungsereignisses und eine bei Eintritt des Überwachungsereignisses auszuführende Aktion, insbesondere eine auszugebende Meldung, für die Überwachung definiert wird, und
**dass** durch den Compiler aus den in der Überwachungstabelle eingegebenen Informationen der Überwachungs-Funktionsbaustein mit ausführbarem Programmcode erzeugt wird.

3. Verfahren nach Patentanspruch 1 oder 2,
**dadurch gekennzeichnet**,
die Daten für den Operand in den Datenbaustein des Überwachungs-Funktionsbausteins kopiert werden.

4. Verfahren nach einem der vorhergehenden Patentansprüche,
**dadurch gekennzeichnet**,
die Daten für den Operand in zumindest eine globale Variable oder einen globalen Datenbaustein des Betriebsprogramms kopiert werden.

5. Verfahren nach einem der vorhergehenden Patentansprüche,
**dadurch gekennzeichnet,**
**dass** für den Fall, dass in einem übergeordneten Funktionsbaustein oder Organisationsbaustein eine lokale Instanz einer zu überwachenden Funktion instanziiert wird oder ein Aufrufbefehl zu einer solchen in den übergeordneten Funktionsbaustein oder Organisationsbaustein eingefügt wird, die Überwachungen aus der Überwachungstabelle dieser Funktion der Überwachungstabelle des jeweiligen übergeordneten Funktionsbausteins oder Organisationsbausteins zugeordnet werden.

6. Verfahren nach einem der vorhergehenden Patentansprüche,
**dadurch gekennzeichnet,**
**dass** die Überwachungstabelle eine von einem Benutzer editierbare Informationseinheit mit mehreren Datenfeldern für die Informationen eines jeweiligen Überwachungsauftrages umfasst, wobei die Überwachungstabelle mehrere Zeilen, Blätter oder sonstige Informationseinheiten für die Eingabe mehrerer Überwachungsaufträge umfasst.

7. Verfahren nach einem der vorhergehenden Patentansprüche,
**dadurch gekennzeichnet,**
**dass** die Überwachungstabelle für die Auslösebedingung zumindest einer Überwachung einen Verweis zu einem Eingabefeld enthält, wobei mittels dieses Eingabefeldes die Auslösebedingung eingebbar oder editierbar ist.

8. Verfahren nach Patentanspruch 7,
**dadurch gekennzeichnet, dass** das Eingabefeld ein Programmeditor-Fenster für Programmcode in einer Programmiersprache für speicherprogrammierbare Steuerungen ist.

9. Verfahren nach einem der vorhergehenden Patentansprüche,
**dadurch gekennzeichnet,**
**dass** die Überwachungstabelle für zumindest einen darin definierten Überwachungsvorgang mit einem bei Eintritt der Auslösebedingung auszugebenden Fehlertext oder eine Fehlerinformation versehen wird, wobei der Fehlertext oder die Fehlerinformation zumindest einen Platzhalter für einen zur Laufzeit zu aktualisierenden Wert eines Operanden oder einer Variablen umfasst.

10. Verfahren nach einem der vorhergehenden Patentansprüche,
**dadurch gekennzeichnet,**
**dass** für die Abarbeitung des Betriebsprogramms der Automatisierungskomponente eine Anzahl Ablaufebenen vorgesehen sind, zu denen jeweils ein zugeordneter Baustein, insbesondere Organisationsbaustein, in einem eigenen Zyklus oder von einem unterschiedlichen Ereignis gesteuert aufgerufen wird,
wobei für das Betriebsprogramm eine Mehrzahl Überwachungstabellen vorgesehen werden und jede dieser Überwachungstabellen und damit die darin jeweils definierten Überwachungsvorgänge einer dieser Ablaufebenen zugeordnet wird,
wobei jeweils einem der jeweiligen Ablaufebene zugeordneten Baustein, insbesondere Organisationsbaustein, der Überwachungs-Funktionsbaustein mit dem ausführbarem Programmcode, der aus den gesamten Inhalten der jeweiligen Überwachungstabelle erzeugt wird, oder ein Aufrufbefehl zu diesem Programmcode, hinzugefügt wird.

11. Engineeringsystem zur Erzeugung von Programmcode für die Überwachung von Betriebszuständen einer Funktion eines Betriebsprogramms einer industriellen Automatisierungskomponente,
wobei das Engineeringsystem zumindest einen Editor zur Erstellung und Bearbeitung von Quellcode und einen Compiler zur Erzeugung von ausführbarem Programmcode umfasst,
**dadurch gekennzeichnet,**
**dass** der Editor zur Definition zumindest einer temporärer Variable oder eines Übergabeparameters oder eines Rückgabeparameters der Funktion als zu überwachenden Operand für die Überwachung eingerichtet ist, und
**dass** der Compiler zur Erzeugung eines Überwachungs-Funktionsbausteins mit ausführbarem Programmcode eingerichtet ist,
wobei dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt wird, wobei zur Überwachung der temporären Variablen der Funktion durch den Compiler bei der Erzeugung des ausführbaren Programmcodes des Betriebsprogramms zumindest ein oder jeder Aufrufbefehl für die zu überwachende Funktion oder der ausführbare Programmcode der Funktion selbst mit einer Befehlssequenz erweitert wird, und
wobei diese Befehlssequenz derart ausgestaltet ist, dass mit deren Abarbeiten die Daten für den Operanden in einen Datenspeicher des Überwachungs-Funktionsbausteins kopiert werden.
